# EUROPEAN PATENT SPECIFICATION

(11) **EP 1 430 419 B1**
(45) Date of publication and mention of the grant of the patent: **13.03.2019**
(21) Application number: 02753547.5
(22) Date of filing: 28.08.2002
(51) Int. Cl.: G06F 17/30

(54) **CLUSTER CACHING WITH CONCURRENCY CHECKING**
CLUSTER-CACHE-SPEICHERUNG MIT GLEICHZEITIGKEITSPRÜFUNG
ANTEMEMORISATION DE GROUPEMENTS AVEC VERIFICATION D'ACCES SIMULTANE

(30) Priority: 30.08.2001 US 316187 P; 30.08.2001 US 316190 P; 02.08.2002 US 211713; 02.08.2002 US 211712
(43) Date of publication of application: 23.06.2004
(73) Proprietor: Oracle International Corporation, Redwood Shores, CA 94065 (US)
(72) Inventor: JACOBS, Dean Bernard, Berkeley, California 94707 (US); WOOLEN, Rob, San Francisco, CA 94127 (US); MESSINGER, Adam, San Francisco, California 94131 (US); WHITE, Seth, Sans Francisco, California 94116 (US)
(74) Representative: D Young & Co LLP
(86) International application number: PCT/US2002/027315
(87) International publication number: WO 2003/021484

(56) References cited:
- US-A- 5 737 536
- US-A- 5 970 488
- US-A- 6 012 059
- US-A- 6 044 367
- US-A- 6 112 304
- US-B1- 6 192 365
- US-B1- 6 351 775
- US-B1- 6 477 150
- US-B1- 6 484 143
- COLTON M: "Replicated data in a distributed environment" PARALLEL AND DISTRIBUTED INFORMATION SYSTEMS, 1993., PROCEEDINGS OF TH E SECOND INTERNATIONAL CONFERENCE ON SAN DIEGO, CA, USA 20-22 JAN. 1993, LOS ALAMITOS, CA, USA,IEEE COMPUT. SOC, US, 20 January 1993 (1993-01-20), pages 227-228, XP010031720 ISBN: 978-0-8186-3330-0
- SON S H ET AL: "Performance evaluation of real-time locking protocols using a distributed software prototyping environment" PROCEEDINGS OF THE INTERNATIONAL CONFERENCE ON DISTRIBUTED COMPUTING SYSTEMS. PARIS, MAY 28 - JUNE 1, 1990; [PROCEEDINGS OF THE INTERNATIONAL CONFERENCE ON DISTRIBUTED COMPUTING SYSTEMS], LOS ALAMITOS, IEEE COMP. SOC. PRESS, US, vol. CONF. 10, 28 May 1990 (1990-05-28), pages 124-131, XP010019314 ISBN: 978-0-8186-2048-5
- JIA WANG: "A survey of web caching schemes for the Internet", COMPUTER COMMUNICATION REVIEW, ACM, NEW YORK, NY, US, vol. 29, no. 5, 5 October 1999 (1999-10-05), pages 36-46, XP058204299, ISSN: 0146-4833, DOI: 10.1145/505696.505701

## Description

### FIELD OF THE INVENTION

The invention relates generally to a system for storing data. The invention relates more specifically to a system and method for caching data and checking concurrency.

### BACKGROUND

When a data item is stored in a single database or data store that is accessible over a network, it is often the case that multiple servers or clients will require access to that data item. Traditionally, this requires data be read from the database each time the data item is accessed. Each read from the database is relatively resource intensive and may be relatively inefficient.

One way of overcoming some of the efficiency and scalability problems, associated with requiring a server or client to read from the database each time a data item is to be accessed, is to store the data item in cache memory. In this way, once a server or client has read a data item from the database it may simply store a copy of that item in a local cache. That local copy of the data item can then be used if future access is needed. This process may be appropriate and efficient for data items that never change, but problems arise when a data item is updated in the database.

If a data item stored in the database is updated, a copy of that data item stored in a local cache on the network may be different from the item in the database, as it will not automatically receive the update. The problem intensifies when there are multiple local copies on different servers and/or clients on the network. Since each of these local copies is created at a different time, there can be multiple versions of the data item on the network. If a user tries to update or view the data item, the copy accessed by the user may not be current and/or correct.

US Patent No. 6,012,059 discloses that local transactions are run at replication sites while receiving and tracking replication packages from primary sites. If a package coming in from a primary site updates data that a local transaction used, the data is considered stale and the local transaction is restarted. When the replication site wishes to commit (e.g., update data at the primary sites), a special dummy marker is submitted and committed. The marker comprises a dummy transaction that updates a piece of data at the primary site private to the replication site. The local site waits for the dummy transaction in the stream of replication packages sent from the primary site. Once the dummy transaction is received, the replication site is assured that any subsequent replication packages from the primary site will not affect the local transaction. If the replication packages received before the marker do not affect data items referenced during the local transaction, the local transaction commits.

US Patent No. 6,192,365 relates to a method and apparatus for managing a transaction log which contains updates representing operations performed on a database replica in a network of disconnectable computers. There is provision for compression of the log by the identification and removal of redundant updates. There is also provision for restoration of prior versions of database objects using the log.

The problems with concurrency can have drastic consequences, such as for example when a user accesses a data item showing a bank account balance. If the local copy of the bank account balance has not been updated to show a withdrawal, for example, the bank account balance shown to the user may in fact show an incorrectly large balance. This could lead the user to unknowingly overdraw the account. Further, a third party accessing the account balance, or a device such as an ATM, would have no way of knowing that the balance being shown is incorrect.

The article "A survey of Web Caching Schemes for the Internet" by Jia Wang, in "Computer Communication Review" vol. 29 no. 5 of 5 October 1999, pages 36-46, shows a survey of the state-of-the-art techniques used in Web caching systems and, in particular, the approaches used in the art to solve the problem of keeping cache coherency on the Web.

### BRIEF SUMMARY

The present invention is defined by the appended claims 1 and 2.

### BRIEF DESCRIPTION OF THE DRAWINGS

Figure 1 is a diagram of a the first part of an approach in accordance with one embodiment of the present invention.
Figure 2 is a diagram of the first and second parts of an approach in accordance with one example of the present invention.
Figure 3 is a flowchart for an update process in accordance with one embodiment of the present invention.
Figure 4 is a flowchart for a process for updating a data item when the local copy and original copy are out-of-sync, in accordance with one embodiment of the present invention.
Figure 5 is a flowchart for a process for updating network servers on the network, in accordance with one example of the present invention.
Figure 6 is a flowchart for a one phase process in accordance with one example of the present invention.
Figure 7 is a flowchart for a two phase process in accordance with one example of the present invention.

### DETAILED DESCRIPTION

Systems in accordance with the present invention allow for the caching of data while maintaining concurrency across a network, such as a local area network (LAN), ethernet, or Internet. Such a system can utilize one or both of a two-part approach to updating data items while maintaining concurrency. Such systems can implement concurrent caching through any software or hardware means known or used in the computer arts, or hereinafter developed. These systems can also utilize any appropriate software applications, objects, languages, or executables, such as may be designed to utilize, for example, Java, HTML, and XML.

In the first part of one such approach in accordance with the present invention, a client or server on a network reads a data item from a database and stores a copy of the data item in a local cache. If the server or client wishes to update the data item in the database, the update can be "conditioned" or "predicated" on whether the data item stored in local cache corresponds to the current version of the data item stored in the database. This approach maintains concurrency between the client/server desiring to update the data item and the database. The caching of data in this manner can also improve performance and scalability.

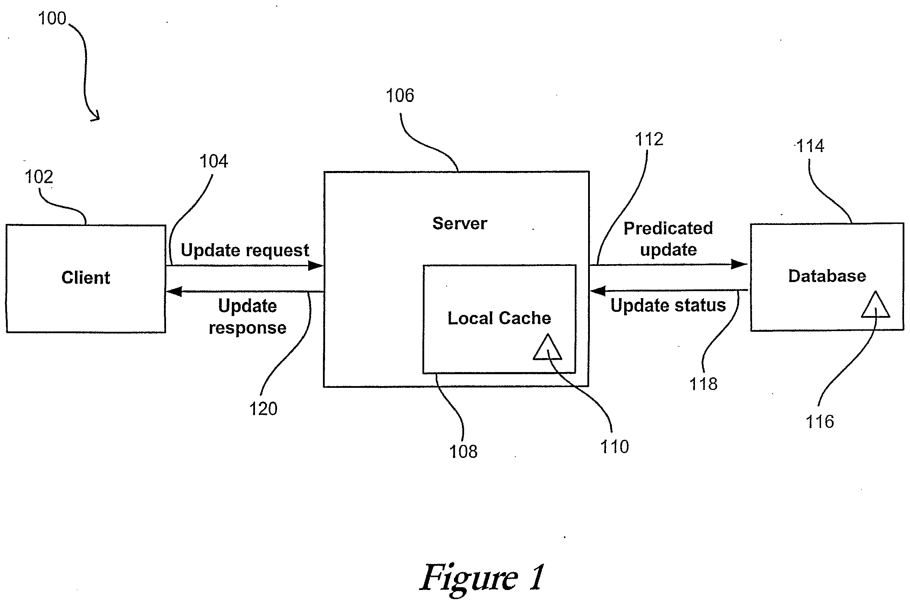

One example of a first part of an approach **100** is shown in **Figure 1****.** Here, a client **102** makes an update request **104** to a network server **106.** The network server **106** in this example stores a copy of the data item **110** to be updated in a local cache **108.** When the network server **106** receives the update request **104,** the server **106** checks the local copy of the item **110** to see if the update may be processed. If the server **106** determines that the update may be processed using information in the local copy of the data item **110,** the server **106** sends a predicated update **112** to the database **114** storing the original copy of the data item **116.** If the information in the original copy of the data item **116** is the same as the information in the local copy **110,** the update may be committed to the database. If the information is different, the update is not committed. The server **106** receives an update status message **118** from the database **114,** indicating whether the update was committed.

If the update was committed, the server can also commit the update to the copy of the data item **110** in local cache **108.** If the update was not committed, because the data items **110, 116** were out of sync, the server can drop its copy of the data item **110** from local cache **108** and request a new copy from the database **114.**

Once the server **106** has the new data item, it can again send a predicated update **112** to the database **114.** Alternatively, the server can send a message to the client **102** asking whether or not to attempt an update on the new data item. The server **106** can either abort the update, or continue the process of trying a predicated update and getting new copies of the data item as needed until the update is committed. Once the update is committed or aborted, the server **106** can send an update response **120** to the client, indicating the end result of the update attempt.

The second part of this approach occurs after a client/server has updated a data item in the database. Since other clients and/or servers on the network may also have a copy of the data item stored in local cache, the client/server making the update can contact the other servers on the network to let them know that the data item has been updated. The other clients and/or servers on the network can then update a copy of the data item stored in a local cache, request a current copy of the data item, or simply drop the local copy of the data item and request a copy from the database if and when it is needed. If a copy is later requested, the copy can be stored in local cache at that time.

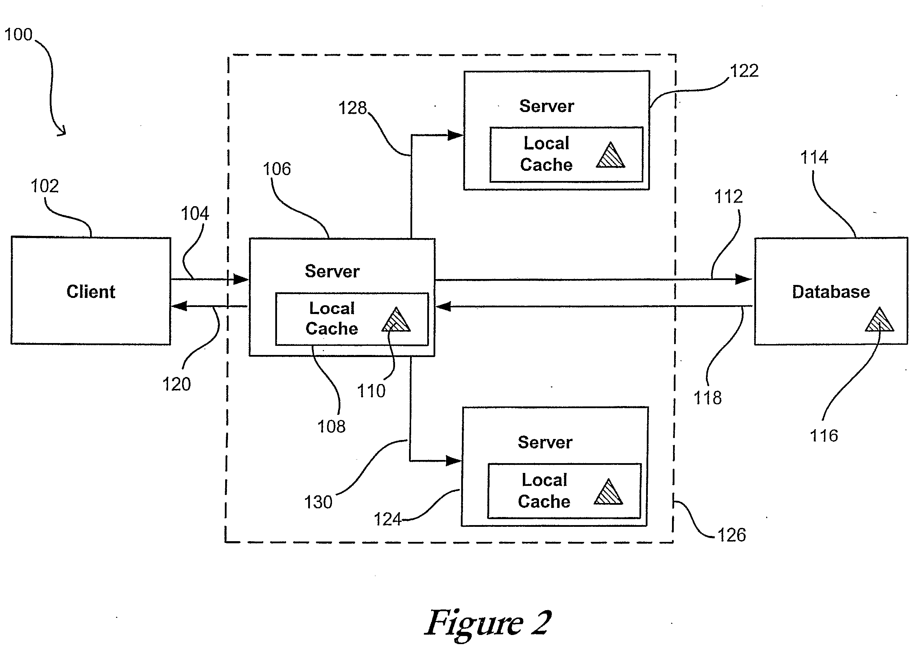

**Figure 2** shows the second stage of the approach **100** described with respect to Figure 1. In **Figure 2****,** once server **106** updates the data item **116** in the database **114** and the copy of the data item **110** in local cache **108,** server **106** sends update messages **128, 130** to the other servers **122, 124** in the cluster **126.** These messages can take the form of point-to-point messages or multicast heartbeats, such as is described above.

For example, in a banking system, each server on the banking system network can potentially store a copy of a user's bank account balance in local cache. Each local cache can include other information about a user account, such as account information and transaction history. This information can be cached, in whole or in part, on each server on the network.

In such a system, a transaction may occur such as an ATM transaction. A server in communication with the ATM can store a cached copy of the account balance of the user initiating the transaction. If a user of the ATM wishes to withdraw $100 from a user account, for example, the server could read the balance from memory, determine whether the account contains sufficient funds for the transaction, and subtract the $100 from the account balance either before or after disbursing the funds.

In order to prevent the user from overdrawing the account, the server can first verify that the local copy of the user account balance is current with the balance stored in the database. For example, if the previous balance stored locally was $500, the server could send an update message to the database such as "update balance = $400", which could also include the current value of the account in local cache, and make the update predicated on the fact that the current account balance in the database is the same as the current balance of the account in local cache.

If the account balance stored in the database is not the same as the balance in local cache, the server may roll back the update. Once an update is rolled back, the server can drop its copy in local cache, read the account information from the database, then attempt the update again. For example, if the local copy of the account balance said that the balance was $500, and the database reflected a balance of $1000, the server would roll back the $400 update attempt and try a predicated $900 update, subtracting the $100 withdrawal from the current $1000 balance. This second update can again be predicated on the fact that the account balance has not changed since it was last read by the server. This process continues until either the account balance is updated appropriately, or the transaction is aborted due to insufficient funds, etc.

If a server succeeds in updating a data item in the database, it can also update the copy in local cache, such that the local copy is current with the version of the data item in the database. For a network in which multiple servers (or clients) can have a copy of the data item in a local cache, the server updating the data item can notify the other servers that the data item has been updated. This can include any or all other servers or clients on a network, in a domain, in a cluster, or in any other network grouping. This notification can be accomplished in any of a number of ways, such as by a point-to-point connection with each server/client, by multicasting, by a one-phase distribution method, by a two-phase distribution method, by heartbeating an update or a delta, or any other appropriate messaging technique.

It may be desirable that the sending of the notification is both reliable in the face of failures and scalable, such that the process makes efficient use of the network. One simple approach is to have the server updating the data item ("updating server") individually contact each server or client on the network ("network server") and transfer a message over a point-to-point link, such as a TCP/IP connection. The message can tell these network servers that the data item has been updated, and that the network servers should drop any copy of this data item in local cache. This approach may lead to inconsistent copies of the data if one or more of the network servers are temporarily unreachable, or if the network servers encounter an error in processing the update.

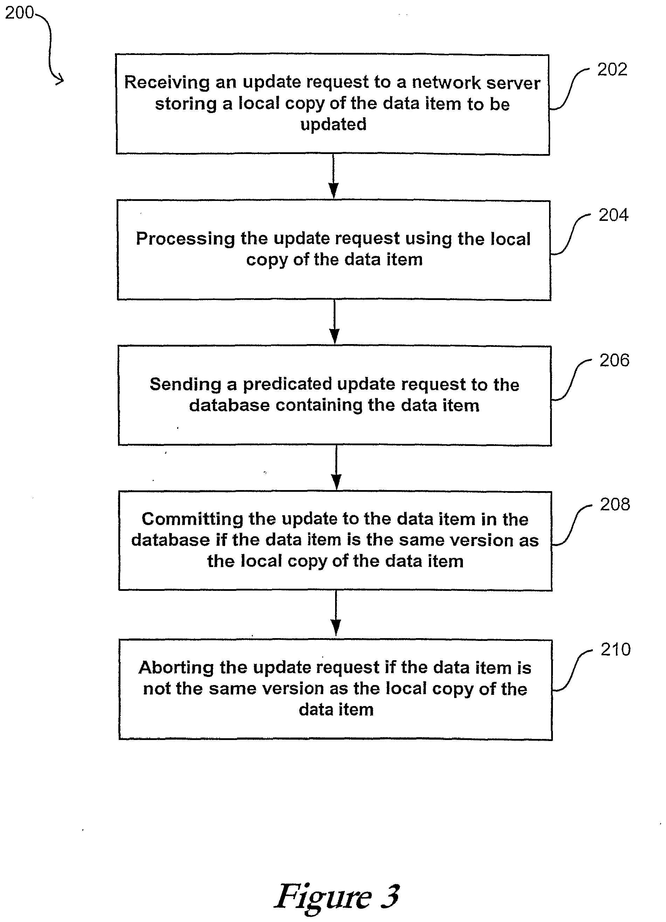

Steps in a general process that can be used in accordance with the present invention are shown in **Figures 3-5****.** In the process **200** of **Figure 3****,** an update request is received, such as from a client, to a network server storing a local copy of the data item to be updated **202.** The update is processed by the network server using the local copy of the data item **204.** A predicated update request is sent from the network server to the network database containing the original copy of the data item **206.** If the original copy and local copy of the data item contain the same version of the data item, the update request is committed **208.** If not, the predicated update request is aborted **210.**

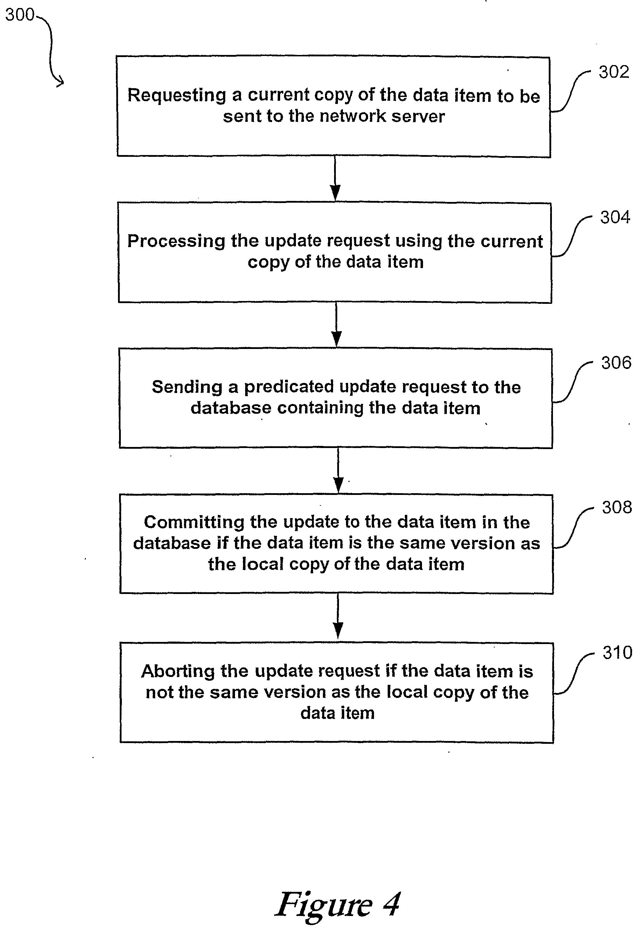

**Figure 4** shows a process **300** that can be used if the predicated update request is aborted. The network server can request a current copy of the data item **302.** The network server can then process the update request using the current copy of the data item **304.** A predicated update request is again sent from the network server to the network database containing the original copy of the data item **306.** If the original copy and current copy of the data item contain the same version of the data item, the update request is committed **308.** If not, the predicated update request is again aborted **310** and the process **300** may be repeated until the update is committed.

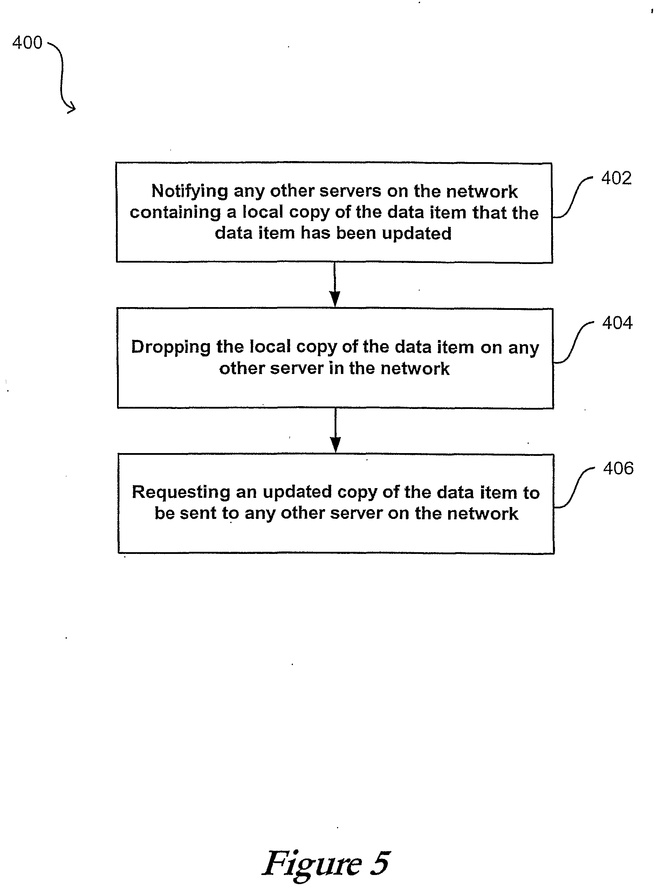

**Figure 5** shows a process **400** that may be used once the update is committed. Any other servers on the network, such as servers in the scope of an update or servers in a common cluster or domain, are notified that the data item is being updated **402.** Any server that is notified then drops any local copy of the data item being stored, such as in a local cache **404.** Those servers may choose to request an updated copy of the data item, either soon after dropping the local copy or upon receiving a subsequent request relating to that data item **406.**

In the case of a two-phase commit, any other servers on the network, such as in the scope of an update or in the same cluster, can be notified that an item is being updated during the commit. For example, an update can first go through a prepare stage in which it is determined whether or not the update can be successfully committed. During this phase, or at least before the update is committed, any server that is notified of the update can veto the commit. By vetoing the commit, any preparation is rolled back and the update does not get written to the database. If the update successfully goes through a prepare phase, and does not get vetoed by a server, the update can get committed to the data item in the database.

The sending of the notification can also be sent by multicasting the notification to the other servers/clients that might be caching a local copy of the data item. Multicasting in this instance may comprise the updating server sending the notification once to the network/cluster/domain, which is then passed to the network servers/clients. In simple multicasting, the message is only sent once, such that a server that does not receive the update may fail to drop the outdated copy of the item. This can result in that server having to go through two or more iterations of predicated update attempts for that data item when processing a subsequent request.

The sending of the notification can also be sent through a "heartbeat." A heartbeat in this approach is a periodic message, typically multicast although other messaging means may be utilized, that is sent to servers/clients that might be storing a local copy of the data item. An updating server can continue to heartbeat the latest update(s) for a given period of time, for a given number of heartbeats, until each server/client responds it has received the heartbeat, or any other appropriate measure.

Each update to a data item can be packaged as an incremental delta between versions. A protocol in accordance with the present invention may integrate two methods for the distribution of updates, although other appropriate methods can be used accordingly. These distribution methods are referred to as a one-phase method and a two-phase method, and provide a tradeoff between consistency and scalability. In a one-phase method, which can favor scalability, each of the network servers obtains and processes updates at its own pace. The network servers get updates from an updating server at different times, but commit to each update as soon as the update is received. One of the network servers can encounter an error in processing an update, but in the one-phase method this does not prevent the network servers from processing the update.

In a two-phase method in accordance with the present invention, which can favor consistency, the distribution is "atomic," in that either all or none of the network servers successfully process the update. There are separate phases, such as prepare and commit phases, which can allow for a possibility of abort. In the prepare phase, the updating server determines whether each of the network servers can take the update. If all the network servers indicate that they can accept the update, the new data is sent to the network servers to be committed in the commit phase. If at least one of the network servers cannot take the update, the update can be aborted, resulting in no commit. In this case, an updating server is informed that it should roll back the prepare and nothing is changed. Such a protocol in accordance with the present invention is reliable, as one of the network servers that is unreachable when an update is committed, in either method, eventually gets the update.

A system in accordance with the present invention can also ensure that a temporarily unavailable server eventually receives all updates. For example, a server may be temporarily isolated from the network, then come back into the network without restarting. Since the server is not restarting, it normally would not check for updates. The server coming back into the network can be accounted for by having the server check periodically for new updates, or by having an updating server check periodically to see whether the network servers have received the updates.

In one example, an updating server regularly sends multicast "heartbeats" to the network servers, such as for a given period of time or a given number of heartbeats. Since a multicast approach can be unreliable, it is possible for one of the network servers to miss arbitrary sequences of heartbeats. For this reason, heartbeats can contain a window of information about recent updates. Such information about previous updates can be used to reduce the amount of network traffic, as explained below. In an example such as an account balance, historical information may not be necessary, such that a heartbeat may simply contain the current balance.

The updating server can continue to periodically send a multicast heartbeat containing the version number to the network servers. This allows any server that was unavailable, or unable to receive and process a delta, to determine that it is not on the current version of the data item and request a delta or update at a later time, such as when the slave comes back into the system. If the current value is contained in the heartbeat, the server may simply commit the new value.

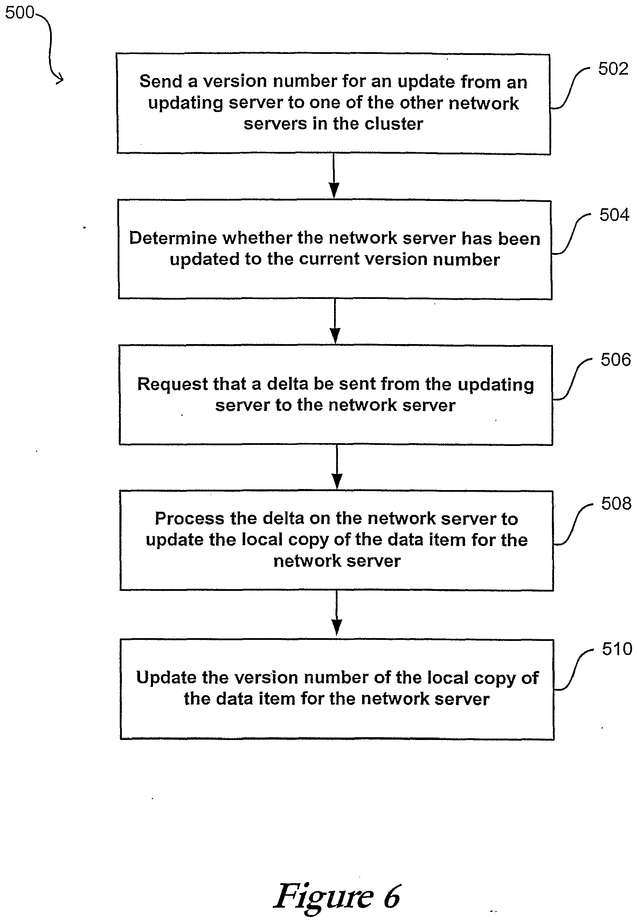

For an update in a one-phase method, these heartbeats can cause each of the network servers to request a delta starting from that server's current version of the data item. Such a process is shown in the flowchart of **Figure 6****.** In this basic process **500 a** version number for the current data item on the updating server, or in the database, is sent from the updating server to one of the other network servers **502.** The network server determines whether it has been updated to the current version number **504.** If the network server is not on the current version, it requests that a delta be sent from the updating server containing the information needed to update the data item **506.** When the delta is sent, the network server processes the delta in order to update to the current version **508.** The network server also updates its version number for the data item to the current version number **510.**

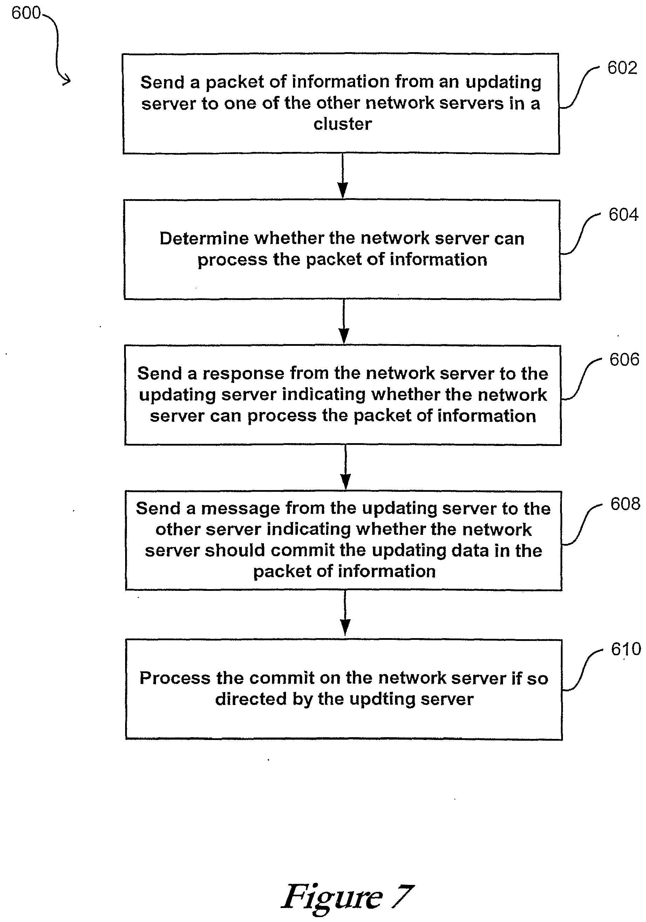

For an update in a two-phase method, the updating server can begin with a prepare phase in which it pro-actively sends each of the network servers a delta from the immediately-previous version. Such a process is shown in the flowchart of **Figure 7****.** In this basic process **600,** a packet of information is sent from the updating server to at least one other network server **602.** Each of the network servers receiving the packet determines whether it can process that packet and update to the current version **604.** Each server receiving the packet responds to the updating server, indicating whether the network server can process the packet **606.** If all the network servers (to which the delta is sent) acknowledge successful processing of the delta within some timeout period, the updating server can decide to commit the update. Otherwise, the updating server can decide to abort the update. Once this decision is made, the updating server sends a message to the network server(s) indicating whether the update should be committed or aborted **608.** If the decision is to commit, each of the network servers processes the commit **610.** Heartbeats can further be used to signal whether a commit or abort occurred, in case the command was missed by one of the slaves.

In addition to the ability of a server to pull a delta, an updating server can have the ability to push a delta during two-phase distribution. In one example, these deltas are always between successive versions of the data. This two-phase distribution method can minimize the likelihood of inconsistencies between participants. Servers can process a prepare as far as possible without exposing the update to clients or making the update impossible to roll back. This may include such tasks as checking the servers for conflicts. If any of the servers signals an error, such as by sending a "disk full" or "inconsistent configuration" message, the update can be uniformly rolled back.

It is still possible, however, that inconsistencies may arise. For instance, there may be errors in processing a commit, for reasons such as an inability to open a socket. Servers may also commit and expose the update at different times. Because the data cannot reach every managed server at exactly the same time, there can be some rippling effect. The use of multicasting provides for a small time window, in an attempt to minimize the rippling effect. In one example, a prepared server will abort if it misses a commit, whether it missed the signal, the master crashed, etc.

A best-effort approach to multicasting can cause a server to miss a commit signal. If an updating server crashes part way through the commit phase, there may be no logging or means for recovery. There may be no way for the updating server to tell the remaining servers that they need to commit. Upon abort, some servers may end up committing the data if the version is not properly rolled back. In one example, the remaining servers could get the update using one-phase distribution. This might happen, for example, when a server pulls a delta in response to a heartbeat received from an updating server. This approach may maintain system scalability, which might be lost if the system tied down distribution in order to avoid any commit or version errors.

If the information regarding the previous versions was not included in a delta, a server might have to abort and restart if that server was prepared but missed a commit. With the inclusion of older version information, the server can commit that portion of the update it was expecting upon the prepare, and ask for a new delta to handle more recent updates. Information about a given version can be included for at least some fixed, configurable number of heartbeats, although rapid-fire updates may cause the window to increase to an unacceptable size. In another example, information about an older version is discarded once an updating server determines that all network servers have received the update.

Multicast heartbeats can have several properties that need to be taken into consideration. These heartbeats can be asynchronous or "one-way". As a result, by the time a server responds to a heartbeat, the updating server or database may have advanced to a new state. Further, not all servers respond at exactly the same time. As such, an updating server can assume that a server has no knowledge of its state, and can include that which the delta is intended to update.

These heartbeats can also be unreliable, as a slave may miss arbitrary sequences of heartbeats. This can again lead to the inclusion of older version information in the heartbeats. In one example, heartbeats are received by a server in the order in which they were sent. For example, a server may not commit version seven until it has committed version six. The server can wait until it receives six, or it can simply throw out six and commit seven. This ordering eliminates the possibility for confusion that might be created by versions going backwards.

## Claims

1. A computer implemented method for updating a data item in a server (106), the method comprising:
reading a specific data item (116) from a database (114) by the server and storing said data item as a local cached copy (110) at said server;
receiving an update request for the data item (104) on the server (106);
verifying that the local cached copy (110) is current with the data item (116) stored in the database (114) by sending a predicated update request (112) to the database (114) containing the data item, the predicated update request (112) being conditional on the local cached copy (110) being current with the data item (116) in the database (114), whereby the database (114) commits the update to the data item according to the update request if the information contained in the local cached copy at the server (106) is the same as the information contained in the data item at the database (114) before the update is committed, and whereby the database (114) aborts the update to the data item if the information contained in the local copy is not the same as the information contained in the data item at the database (114) before the update is committed receiving an update status message (118) from the database (114) to the server (106), said update status message (118) indicating whether the data item was updated in the database (114) as a result of the predicated update request (112);
wherein if the update status message (118) indicates that the data item was not updated in the database (114) as a result of the predicated update request (112), the server (106) drops the local cached copy (110), retrieves a new copy of the data item from the database (114), formulates a second predicated update request and sends the second predicated update request to the database; and
whereby, as a result of the second predicated update request, the database updates the data item if the new copy is current with the data item in the database.

2. A system comprising:
a database (114) storing a copy of a data item;
a server (106) adapted to read the copy of the data item from the database (114) and store a local cached copy (110), wherein the server (106) is adapted to receive an update request (104) to update the data item being stored in the database (114);
wherein the server is adapted to verify that the local cached copy (110) is current with the data item (116) stored in the database (114) by sending a predicated update request (112) to the database (114) containing the data item, whereby the database commits the update to the data item according to the update request if the information contained in the local cached copy at the application server (106) is the same as the information contained in the data item at the database (114) before the update is committed, and whereby the database (114) aborts the update to the data item if the information contained in the local copy is not the same as the information contained in the data item at the database (114) before the update is committed;
wherein the server (106) is adapted to receive an update status message (118) from the database (114), said update status message (118) indicating whether the data item was updated in the database (114) as a result of the predicated update request (112);
wherein if the update status message (118) indicates that the data item was not updated in the database (114) as a result of the predicated update request (112), the server (106) is adapted to drop the local cached copy (110), retrieve a new copy of the data item from the database (114), formulate a second predicated update request and send the second predicated update request to the database; and
whereby, as a result of the second predicated update request, the database updates the data item if the new copy is current with the data item in the database.

## Patentansprüche

1. Computerimplementiertes Verfahren zum Aktualisieren eines Datenelements in einem Server (106), das Verfahren umfassend:
Lesen eines spezifischen Datenelements (116) aus einer Datenbank (114) durch den Server und Speichern des Datenelements als ein lokales zwischengespeichertes Exemplar (110) in dem Server;
Empfangen einer Aktualisierungsanforderung für das Datenelement (104) in dem Server (106);
Verifizieren, dass das lokale zwischengespeicherte Exemplar (110) mit dem in der Datenbank (114) gespeicherten Datenelement (116) aktuell ist, durch Senden einer prädizierten Aktualisierungsanforderung (112) an die Datenbank (114), enthaltend das Datenelement, wobei die prädizierte Aktualisierungsanforderung (112) davon abhängig ist, ob das lokale zwischengespeicherte Exemplar (110) mit dem Datenelement (116) in der Datenbank (114) aktuell ist, wobei die Datenbank (114) die Aktualisierung dem Datenelement gemäß der Aktualisierungsanforderung übergibt, wenn die in dem lokalen zwischengespeicherten Exemplar in dem Server (106) enthaltenen Informationen die gleichen sind wie die in dem Datenelement in der Datenbank (114) vor der Übergabe der Aktualisierung enthaltenen Informationen, und wobei die Datenbank (114) die Aktualisierung zu dem Datenelement abbricht, wenn die in dem lokalen Exemplar enthaltenen Informationen nicht die gleichen sind wie die in dem Datenelement in der Datenbank (114) enthaltenen Informationen, bevor die Aktualisierung übergeben wird,
Empfangen einer Aktualisierungsstatusmeldung (118) von der Datenbank (114) an den Server (106), wobei die Aktualisierungsstatusmeldung (118) angibt, ob das Datenelement in der Datenbank (114) als ein Ergebnis der prädizierten Aktualisierungsanforderung (112) aktualisiert wurde;
wobei, wenn die Aktualisierungsstatusmeldung (118) angibt, dass das Datenelement in der Datenbank (114) als ein Ergebnis der prädizierten Aktualisierungsanforderung (112) nicht aktualisiert wurde, der Server (106) das lokale zwischengespeicherte Exemplar (110) verwirft, ein neues Exemplar des Datenelements aus der Datenbank (114) abruft, eine zweite prädizierte Aktualisierungsanforderung formuliert und die zweite prädizierte Aktualisierungsanforderung an die Datenbank sendet; und
wobei die Datenbank, als ein Ergebnis der zweiten prädizierten Aktualisierungsanforderung, das Datenelement aktualisiert, wenn das neue Exemplar mit dem Datenelement in der Datenbank aktuell ist.

2. System, umfassend:
eine Datenbank (114), die ein Exemplar eines Datenelements speichert;
einen Server (106), angepasst zum Lesen des Exemplars des Datenelements aus der Datenbank (114) und Speichern eines lokalen zwischengespeicherten Exemplars (110), wobei der Server (106) angepasst ist, eine Aktualisierungsanforderung (104) zum Aktualisieren des Datenelements, das in der Datenbank (114) gespeichert ist, zu empfangen;
wobei der Server angepasst ist, zu verifizieren, dass das lokale zwischengespeicherte Exemplar (110) mit dem in der Datenbank (114) gespeicherten Datenelement (116) aktuell ist, durch Senden einer prädizierten Aktualisierungsanforderung (112) an die Datenbank (114), enthaltend das Datenelement, wobei die Datenbank die Aktualisierung auf das Datenelement gemäß der Aktualisierungsanforderung übergibt, wenn die in dem lokalen zwischengespeicherten Exemplar in dem Anwendungsserver (106) enthaltenen Informationen die gleichen sind wie die in dem Datenelement in der Datenbank (114) enthaltenen Informationen, bevor die Aktualisierung übergeben wird, und wobei die Datenbank (114) die Aktualisierung auf das Datenelement verwirft, wenn die in dem lokalen Exemplar enthaltenen Informationen nicht die gleichen sind wie die in dem Datenelement in der Datenbank (114) enthaltenen Informationen, bevor die Aktualisierung übergeben wird;
wobei der Server (106) angepasst ist, eine Aktualisierungsstatusmeldung (118) von der Datenbank (114) zu empfangen, wobei die Aktualisierungsstatusmeldung (118) angibt, ob das Datenelement in der Datenbank (114) als ein Ergebnis der prädizierten Aktualisierungsanforderung (112) aktualisiert wurde;
wobei, wenn die Aktualisierungsstatusmeldung (118) angibt, dass das Datenelement in der Datenbank (114) als ein Ergebnis der prädizierten Aktualisierungsanforderung (112) nicht aktualisiert wurde, der Server (106) angepasst ist, das lokale zwischengespeicherte Exemplar (110) zu verwerfen, ein neues Exemplar des Datenelements aus der Datenbank (114) abzurufen, eine zweite prädizierte Aktualisierungsanforderung zu formulieren und die zweite prädizierte Aktualisierungsanforderung an die Datenbank zu senden; und
wobei die Datenbank, als ein Ergebnis der zweiten prädizierten Aktualisierungsanforderung, das Datenelement aktualisiert, wenn das neue Exemplar mit dem Datenelement in der Datenbank aktuell ist.

## Revendications

1. Procédé mis en oeuvre par ordinateur pour mettre à jour un élément de données dans un serveur (106), le procédé comprenant les étapes suivantes :
lire, par le serveur, un élément de données spécifique (116) dans une base de données (114), et stocker ledit élément de données sous la forme d'une copie mise en mémoire cache locale (110) sur ledit serveur ;
recevoir une demande de mise à jour pour l'élément de données (104) sur le serveur (106) ;
vérifier que la copie mise en mémoire cache locale (110) est à jour avec l'élément de données (116) stocké dans la base de données (114) en envoyant une demande de mise à jour prévue (112) à la base de données (114) contenant l'élément de données, la demande de mise à jour prévue (112) étant conditionnelle du fait que la copie mise en mémoire cache locale (110) soit à jour avec l'élément de données (116) dans la base de données (114), où la base de données (114) procède à la mise à jour avec l'élément de données selon la demande de mise à jour si les informations contenues dans la copie mise en mémoire cache locale sur le serveur (106) sont les mêmes que les informations contenues dans l'élément de données dans la base de données (114) avant que la mise à jour ne soit effectuée, et où la base de données (114) interrompt la mise à jour avec l'élément de données si les informations contenues dans la copie locale ne sont pas les mêmes que les informations contenues dans l'élément de données dans la base de données (114) avant que la mise à jour soit effectuée, recevoir un message d'état de mise à jour (118) de la base de données (114) au niveau du serveur (106), ledit message d'état de mise à jour (118) indiquant si l'élément de données a été mis à jour dans la base de données (114) en conséquence de la demande de mise à jour prévue (112) ;
où, si le message d'état de mise à jour (118) indique que l'élément de données n'a pas été mis à jour dans la base de données (114) en conséquence de la demande de mise à jour prévue (112), le serveur (106) abandonne la copie mise en mémoire cache locale (110), récupère une nouvelle copie de l'élément de données dans la base de données (114), formule une seconde demande de mise à jour prévue et envoie la seconde demande de mise à jour prévue à la base de données ; et
moyennant quoi, en conséquence de la seconde demande de mise à jour prévue, la base de données met à jour l'élément de données si la nouvelle copie est à jour avec l'élément de données dans la base de données.

2. Système comprenant :
une base de données (114) stockant une copie d'un élément de donnée ;
un serveur (106) adapté pour lire la copie de l'élément de données dans la base de données (114) et stocker une copie mise en mémoire cache locale (110), où le serveur (106) est adapté pour recevoir une demande de mise à jour (104) pour mettre à jour l'élément de données étant stocké dans la base de données (114) ;
où le serveur est adapté pour vérifier que la copie mise en mémoire cache locale (110) est à jour avec l'élément de données (116) stocké dans la base de données (114) en envoyant une demande de mise à jour prévue (112) à la base de données (114) contenant l'élément de données, moyennant quoi la base de données procède à la mise à jour pour l'élément de données selon la demande de mise à jour si les informations contenues dans la copie mise en mémoire cache locale au niveau du serveur d'application (106) sont les mêmes que les informations contenues dans l'élément de données dans la base de données (114) avant que la mise à jour ne soit effectuée, et moyennant quoi la base de données (114) interrompt la mise à jour avec l'élément de données si les informations contenues dans la copie locale ne sont pas les mêmes que les informations contenues dans l'élément de données au niveau de la base de données (114) avant que la mise à jour soit effectuée ;
où le serveur (106) est adapté pour recevoir un message d'état de mise à jour (118) depuis la base de données (114), ledit message d'état de mise à jour (118) indiquant si l'élément de données a été mis à jour dans la base de données (114) en conséquence de la demande de mise à jour prévue (112) ;
où, si le message d'état de mise à jour (118) indique que l'élément de données n'a pas été mis à jour dans la base de données (114) en conséquence de la demande de mise à jour prévue (112), le serveur (106) est adapté pour abandonner la copie mise en mémoire cache locale (110), récupérer une nouvelle copie de l'élément de données dans la base de données (114), formuler une seconde demande de mise à jour prévue et envoyer la seconde demande de mise à jour prévue à la base de données ; et
moyennant quoi, en conséquence de la seconde demande de mise à jour prévue, la base de données met à jour l'élément de données si la nouvelle copie est à jour avec l'élément de données dans la base de données.
